# EUROPÄISCHE PATENTSCHRIFT

(11) **EP 0 475 025 B1**
(45) Veröffentlichungstag und Bekanntmachung des Hinweises auf die Patenterteilung: **29.03.1995**
(21) Anmeldenummer: 91112098.8
(22) Anmeldetag: 19.07.1991
(51) Int. Cl.: G01N 27/22

(54) **Verfahren zum Herstellen eines kapazitiven Feuchtesensors**
Method of manufacturing a capacitive humidity sensor
Procédé de fabrication d'un capteur capacitif d'humidité

(30) Priorität: 12.09.1990 EP 90810689
(43) Veröffentlichungstag der Anmeldung: 18.03.1992
(73) Patentinhaber: ENDRESS + HAUSER GMBH + CO., D-79689 Maulburg (DE)
(72) Erfinder: Hegner, Frank, Dr., W-7850 Lörrach (DE); Kallfass, Traugott, Dr. Ing., W-7141 Grossbottwar (DE)
(74) Vertreter: Morstadt, Volker, Dipl.-Ing. c/o Endress + Hauser Flowtec AG

(56) Entgegenhaltungen:
- EP-A- 0 043 775
- US-A- 4 761 710
- PATENT ABSTRACTS OF JAPAN, Band 8, Nr. 208 (P-302)[1645], 21. September 1984 ; & JP-A-59 91 355

## Beschreibung

Die Erfindung besteht in einem verfahren zum Herstellen eines kapazitiven Feuchtesensors mit folgenden dünnschichttechnickompatiblen Schritten:
Erzeugen einer strukturierten Grundelektrode auf einem Isolierstoffträger, Aufbringen einer feuchteempfindlichen Polymerschicht auf die Grundelektrode in gleichmäßiger Dicke unter Freilassen von Kontaktierbereichen, Aktivierung von Oberflächenbindungen der Polymerschicht, Aufbringen und anschließendes Trocknen einer kolloidalen Dispersion aus SiO₂-oder Al₂O₃-Partikeln einheitlicher Korngröße in dünner Schicht auf die Polymerschicht, Aufbringen einer Deckelektrode auf die nach dem Trocknen der Dispersion auf der Polymerschicht alleine noch gleichverteilt vorhandenen Partikel und Ablösen der Partikel zusammen mit den darauf befindlichen Teilen der Deckelektrode, wodurch Mikrolöcher in der Deckelektrode entstehen.

Bei derartigen kapazitiven Feuchtesensoren ist sicherzustellen, daß die Deckelektrode für Wasserdampf ausreichend durchlässig ist, d.h. die Adsorption und Desorption der Wassermoleküle darf nicht behindert werden, damit sich eine möglichst hohe Ansprechgeschwindigkeit ergibt. Ferner dürfen sich an den Kanten der Öffnungen der Deckelektrode keine Wassermoleküle anlagern. Auch muß sie eine hohe mechanische, elektrische und chemische Langzeitstabilität haben, was bei der Feuchtigkeitsmessung in Gegenwart von aggressiven Substanzen, insb. bei Unterschreitung des Taupunkts, und/oder hohen Temperaturen wichtig ist.

Des weiteren muß der kapazitive Feuchtesensor unempfindlich gegen Verschmutzungen sein, was bedeutet, daß das elektrische Feld des von ihm gebildeten Kondensators nicht durch die Deckelektrode hindurchgreifen darf. Ferner darf sie keine Selektivempfindlichkeit für andere Gase (als Wasserdampf) haben, also darf sie für solche Gase insb. nicht katalytisch wirken. Schließlich muß die Deckelektrode elektrisch ausreichend leitend sein.

Man könnte diese Eigenschaften dadurch zu realisieren suchen, daß entweder eine sehr dünne Au-Schicht (ca. 5 nm) als Deckelektrode verwendet würde, die wegen ihrer Inselstruktur elektrisch instabil wäre, somit zu Kapazitätsänderungen führte und mechanisch praktisch nicht belastbar wäre; oder daß poröse Schichten aus Pt, Cr oder Pd verwendet würden, die sich jedoch ebenfalls als elektrisch instabil erwiesen und hohe sowie instabile Übergangswiderstände ergäben und außerdem im Falle von Pt sowie Pd katalytisch wirkten (z.B. auf H₂ und NH₃); oder daß Deckelektroden mit Kammstruktur vorgesehen würden, die jedoch bei Abständen zwischen deren Zähnen von größer als 1»m wegen des dadurch möglichen Durchgriffs des elektrischen Feldes verschmutzungsempfindlich wären. Solche kapazitiven Feuchtesensoren sind in der US-A- 4761710 und in der EP-A- 0043775 beschrieben.

Die Aufgabe der Erfindung besteht daher darin, die eingangs erläuterten Forderungen an kapazitive Feuchtesensoren durch ein neues Herstellverfahren besser als bisher zu erfüllen.

Durch das erfindungsgemäße Verfahren wird erreicht, daß die Deckelektrode aus einer stabilen und zusammenhängenden Metallschicht besteht, also die erwähnte Inselbildung nicht (mehr) auftritt. In der Deckelektrode sind mit guter Gleichverteilung Mikrolöcher, die einen Durchmesser von mindestens 0,1 »m bis 1 »m, bevorzugt jedoch 250 nm, haben, gebildet, deren Verteilungsdichte so groß ist, daß die Masse der Deckelektrode bis auf einen Wert reduziert ist, bei dem einerseits sich gerade noch keine Inseln bilden und andererseits die geforderte elektrische Stabilität erreicht wird, d.h. daß die Deckelektrode trotz der Mikrolöcher z.B. nicht aufreißt. Durch diese wird auch der erwähnte Durchgriff weitestgehend vermieden.

Bei der Erzeugung der Mikrolöcher kommt das Verfahren der Erfindung, obwohl es mit den üblichen Methoden der Dünnschicht-Technik arbeitet, ohne Maske aus, da es auf geometrietreue Abbildung nicht ankommt. Vielmehr ergibt sich die gleichmäßige Flächenverteilung der Mikrolöcher durch die Aufbringung der SiO₂- oder Al₂O₃-Partikel als kolloidale Dispersion in dünner, gleichmäßiger Schicht sozusagen von selbst, da sich die Partikel auf Grund ihrer elektrischen Ladung gegenseitig abstoßen. Dabei läßt sich die Partikeldichte in einfacher Weise durch den Partikelgehalt des Kolloids einstellen.

Als Polymerschicht wird bevorzugt eine Schicht aus einem Polyimid verwendet, die zweckmäßigerweise zunächst als Polyamidsäure aufgebracht und anschließend polymerisiert wird. Das Polyimid kann in weiterer Ausgestaltung der Erfindung vor dem Aufbringen des Kolloids durch Ionenbeschuß aktiviert werden.

Das Aufbringen des Kolloids auf die Polymerschicht erfolgt bevorzugt, während der Isolierstoffträger in Rotation versetzt wird. Statt dessen kann das Kolloid auch aufgesprüht oder aufgespritzt werden, oder der Isolierstoffkörper wird in das Kolloid getaucht.

Nach einer anderen Weiterbildung der Erfindung kann auf den Partikeln eine Haftschicht aus einem ersten Metall und darauf erst die Deckelektrode aus einem zweiten Metall aufgebracht werden. Das Ablösen der Partikel zusammen mit den darauf befindlichen Teilen der Deckelektrode erfolgt bevorzugt mittels Ultraschalls in einer Flüssigkeit.

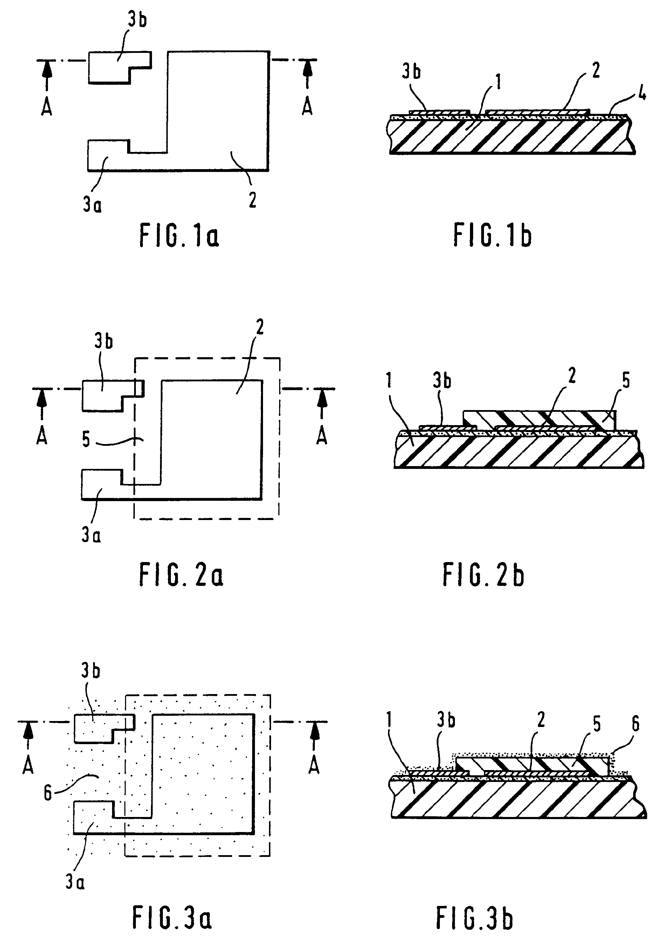

Die Erfindung wird nun anhand der Figuren der Zeichnung näher erläutert, in denen das jeweilige Ergebnis nach einzelnen Verfahrensschritten bei der Herstellung eines Ausführungsbeispiels des Feuchtesensors schematisch in Draufsicht (Fig. 1a bis 6a) und im Schnitt entlang der jeweiligen Linie A-A (Fig. 1b bis 6b) dargestellt ist.

Die Fig. 1 zeigt einen Isolierstoffträger 1, der z.B. aus Glas oder glasierter Keramik besteht. Darauf ist eine Grundelektrode 2 mit einem Kontaktierbereich 3a in einer Dicke von 100 nm bis 300 nm, bevorzugt von 200 nm, aufgebracht, was z.B. durch Sputtern oder Aufdampfen eines entsprechenden Metalls erfolgen kann. Hierfür geeignet sind bevorzugt Ta, aber auch Al oder Cr. Fig. 1a zeigt ferner einen weiteren Kontaktierbereich 3b, dessen Funktion noch erläutert werden wird.

Wird Ta zunächst bei der Massenfertigung großflächig auf ein durch einen letzten Verfahrensschritt in einzelne kapazitive Feuchtesensoren zu zerteilendes Isolierstoffstück aus Glas oder glasierter Keramik aufgebracht und dann zur Erzeugung der Grundelektroden und Kontaktierbereiche durch naßchemisches Ätzen photolithographisch strukturiert, empfiehlt sich vor diesem Ätzen das ganzflächige Aufbringen einer Ta₂O₅-Ätzstoppschicht 4, wodurch das Anätzen des Isolierstoffs unterbunden wird. Sie kann durch Sputtern aufgebracht oder durch Oxidation des Ta erzeugt werden.

Nach Bildung der strukturierten Grundelektroden und Kontaktierbereiche wird eine feuchteempfindliche Polymerschicht 5 aufgebracht, die entsprechend Fig. 2 photolithographisch so strukturiert wird, daß die Kontaktierbereiche 3a, 3b mindestens teilweise freigelassen werden.

Ist als Polymerschicht 5 bevorzugt eine Schicht aus einem Polyimid vorgesehen, so empfiehlt es sich, zunächst Polyamidsäure als eine flüssige Polyimidvorstufe, z.B. durch Aufschleudern (Aufbringen bei schnellem Rotieren des Isolierstoffträgers 1), aufzubringen, sie vor der Strukturierung zu trocknen und danach zu polymerisieren. Die Polyimidvorstufe kann aber auch aufgesprüht oder aufgewalzt werden. Die bevorzugte Dicke der Polyimidschicht beträgt ca. 2,5 »m.

Auf die Polymerschicht 5 wird im nächsten Verfahrensschritt entsprechend Fig. 3 eine dünne kolloidale Dispersion aus SiO₂- oder Al₂O₃-Partikeln 6 einheitlicher Korngröße aufgebracht, bevorzugt durch Aufschleudern (siehe oben), z.B. bei einer Umdrehungszahl von 5.000 U/min bis 7.000 U/min etwa 20 s lang.

Eine besonders gute Gleichverteilung der SiO₂- oder Al₂O₃-Partikel 6 ergibt sich, wenn in weiterer Ausgestaltung der Erfindung vor deren Aufbringen die Oberfläche das Polyimids mit Ionen, z.B. mit Ar-Ionen für etwa 3 min bei einer Leistungsdichte von 0,2 W/cm², beschossen wird, wodurch dessen Oberflächenbindungen aktiviert werden.

Für das Kolloid ist ein Lösungsmittel zu wählen, von dem nach dem Trocknen keine Reste zurückbleiben, die möglicherweise mit Wasserdampf reagieren oder die Empfindlichkeit des Feuchtesensors beeinflussen könnten.

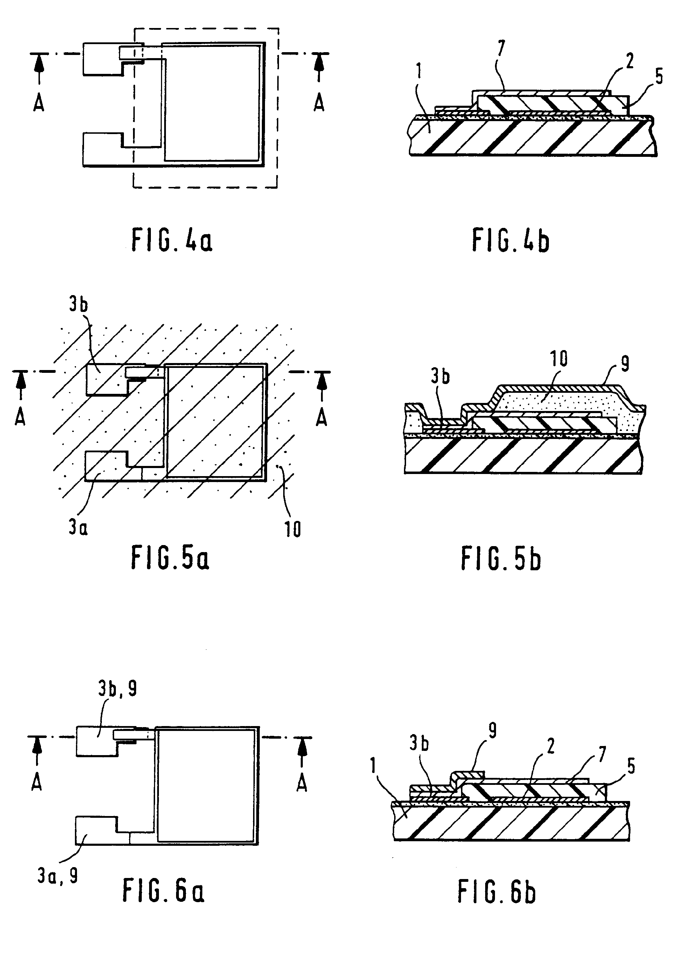

Auf die nach dem Trocknen des Kolloids auf der Polymerschicht 5 alleine noch gleichverteilt vorhandenen Partikel 6 wird im Verfahrensschritt nach Fig. 4 eine Deckelektrode 7 aus Metall, vorzugsweise unter Zwischenlage einer Haftschicht (in den Figuren nicht gezeigt) aus einem anderen Metall, aufgebracht. Besonders geeignete Metalle für die Deckelektrode sind Au, Au/Pd, Cr oder Au/Cr. Die bevorzugte Schichtdicke beträgt ca. 40 nm. Besonders geeignete Metalle für die Haftschicht sind Cr oder Ti in einer bevorzugten Schichtdicke von ebenfalls 40 nm. Die Metalle können aufgedampft oder aufgesputtert werden.

Nach der photolithographischen Strukturierung des Metalls bzw. der Metalle der Deckelektrode 7 werden die Partikel 6 zusammen mit den darauf befindlichen Teilen der Deckelektrode 7 abgelöst, was bevorzugt mittels Ultraschalls in einer Flüssigkeit erfolgt.

Zur Vervollständigung des Feuchtesensor werden nach Fig. 5 noch die Kontaktierbereiche 3a, 3b mit einem geeigneten Kontaktierungsmetall 9, z.B. Au, versehen. Hierzu wird zunächst auf die fertige Deckelektrode 7 eine Lift-off-Photolackschicht 10 geeigneter Dicke aufgebracht und so strukturiert, daß sie nur die Kontaktflecke der Kontaktierbereiche 3a, 3b freiläßt. Danach wird das Kontaktierungsmetall 9 aufgebracht. Anschließend wird die Lift-off-Photolackschicht 10 zusammen mit den darauf befindlichen Teilen des Kontaktierungsmetalls 9 mittels Ultraschalls in einer Flüssigkeit entfernt. Der Kontaktierbereich 3b dient zum Anschluß der Deckelektrode 7.

Den fertigen Feuchtesensor zeigt Fig. 6.

## Patentansprüche

1. Verfahren zum Herstellen eines kapazitiven Feuchtesensors mit folgenden dünnschichttechnik-kompatiblen Schritten:
Erzeugen einer strukturierten Grundelektrode (2) auf einem Isolierstoffträger (1),
Aufbringen einer feuchteempfindlichen Polymerschicht (5) auf die Grundelektrode (2) in gleichmäßiger Dicke unter Freilassen von Kontaktierbereichen (3a, 3b),
Aktivierung von Oberflächenbindungen der Polymerschicht (5),
Aufbringen und anschließendes Trocknen einer kolloidalen Dispersion aus SiO₂-oder Al₂O₃-Partikeln (6) einheitlicher Korngröße in dünner Schicht auf die Polymerschicht (5),
Aufbringen einer Deckelektrode (7) auf die nach dem Trocknen der Dispersion auf der Polymerschicht (5) alleine noch gleichverteilt vorhandenen Partikel (6) und
Ablösen der Partikel (6) zusammen mit den darauf befindlichen Teilen der Deckelektrode (7), wodurch Mikrolöcher in der Deckelektrode entstehen.

2. Verfahren nach Anspruch 1 mit einem Polyimid als Polymerschicht.

3. Verfahren nach Anspruch 2, bei dem Polyamidsäure als Polyimidvorstufe verwendet wird.

4. Verfahren nach einem der Ansprüche 1 bis 3 mit einer Aktivierung des Polyimids durch Ionenbeschuß.

5. Verfahren nach Anspruch 1 mit einer Korngröße der Partikel (6) im Bereich von 250 nm.

6. Verfahren nach einem der Ansprüche 1 bis 3, bei dem die Polymerschicht (5) und/oder die Dispersion der Partikel (6) auf die Polymerschicht (5) aufgesprüht, aufgespritzt, aufgewalzt oder dadurch aufgebracht wird, dass der Isolierstoffträger (1) in Rotation versetzt wird.

7. Verfahren nach Anspruch 1, bei dem auf den Partikeln (6) eine Haftschicht aus einem ersten Metall und darauf erst die Deckelektrode aus einem zweiten Metall aufgebracht wird.

8. Verfahren nach Anspruch 1, bei dem das Ablösen der Partikel (6) zusammen mit den darauf befindlichen Teilen der Deckelektrode mittels Ultraschalls in einer Flüssigkeit erfolgt.

## Claims

1. Method of manufacturing a capacitive humidity sensor comprising the following steps, which are compatible with thin-film technology:
forming a bottom electrode (2) on an insulating substrate (1),
depositing a humidity-sensitive polymer layer (5) of uniform thickness on the bottom electrode (2) leaving contact areas (3a, 3b) uncovered,
activating surface bonds of the polymer layer (5),
applying a colloidal dispersion of SiO₂ or Al₂O₃ particles (6) of uniform grain size as a thin layer to the polymer layer and subsequently drying it,
depositing a cover electrode (7) on the particles (6) still evenly distributed on the polymer layer (5) after the drying of the dispersion, and
removing the particles (6) together with the portions of the cover electrode (7) overlying them,
whereby micro-holes are generated in the cover electrode.

2. A method as claimed in claim 1 wherein the polymer layer is made of a polyimide.

3. A method as claimed in claim 2 wherein polyamide acid is used as a polyimide precursor.

4. A method as claimed in any one of claims 1 to 3 wherein the polyimide is activated by ion bombardment.

5. A method as claimed in claim 1 wherein the grain size of the particles (6) is approximately 250 nm.

6. A method as claimed in any one of claims 1 to 3 wherein the polymer layer (5) and/or the dispersion of the particles (6) on the polymer layer (5) are/is sprayed or rolled on or are/is deposited while the insulating substrate (1) is rotating.

7. A method as claimed in claim 1 wherein an adhesive layer of a first metal is deposited on the particles (6), and wherein the cover electrode of a second metal is deposited on said adhesive layer.

8. A method as claimed in claim 1 wherein the removal of the particles (6) together with the portions of the cover electrode overlying them takes place in a liquid by means of ultrasound.

## Revendications

1. Procédé de fabrication d'un détecteur d'humidité électrosensible comprenant les étapes suivantes compatibles avec la technique en couche mince :
- fabrication d'une électrode de base (2) structurée sur un support de matière isolante (1);
- application selon une épaisseur régulière d'une couche polymère (5) sensible à l'humidité sur l'électrode de base (2) avec libération des zones de contact (3a,3b);
- activation des liaisons de surface de la couche polymère (5);
- application sur la couche polymère (5) et séchage consécutif d'une dispersion colloïdale composée d'une fine couche de particules de SiO₂ ou Al₂O₃ (6) d'une grosseur de grains standard;
- application d'une électrode de couverture (7) sur les particules existantes (6) réparties uniformément après le séchage de la dispersion sur la couche polymère (5) et
- séparation des particules (6) ainsi que des parties de l'électrode de couverture (7) se trouvant sur ces particules, entraînant ainsi l'apparition de microporosités dans l'électrode de couverture.

2. Procédé selon la revendication 1 comprenant un polyimide comme couche polymère.

3. Procédé selon la revendication 2, dans le cas duquel un acide polyamide est utilisé en tant que base polymère.

4. Procédé selon l'une ou l'autre des revendications 1 à 3 comprenant une activation du polyimide par bombardement ionique.

5. Procédé selon la revendication 1 dont la granulométrie des particules (6) est proche de 250 nm.

6. Procédé selon l'une ou l'autre des revendications 1 à 3, dans le cas duquel la couche polymère (5) et/ou la dispersion des particules (6) sur la couche polymère (5) est aspergée, appliquée au pistolet, appliquée au rouleau ou répandue par un procédé tel que le support de matière isolante (1) se déplace en rotation.

7. Procédé selon la revendication 1 dans le cas duquel une couche d'adhésion composée d'un premier métal est déposée sur les particules (6), l'électrode de couverture composée d'un second métal étant déposée sur cette couche d'adhésion.

8. Procédé selon la revendication 1 dans le cas duquel la séparation des particules (6) ainsi que des parties de l'électrode de couverture se trouvant sur ces particules est réalisée en immersion au moyen d'ultrasons.
